# EUROPÄISCHE PATENTSCHRIFT

(11) **EP 2 595 852 B1**
(45) Veröffentlichungstag und Bekanntmachung des Hinweises auf die Patenterteilung: **28.02.2018**
(21) Anmeldenummer: 11739005.4
(22) Anmeldetag: 05.07.2011
(51) Int. Cl.: B61L 15/00

(54) **VORRICHTUNG ZUR ÜBERTRAGUNG VON DATEN ZWISCHEN ZWEI SCHIENENFAHRZEUGEN**
DEVICE FOR TRANSMITTING DATA BETWEEN TWO RAILWAY VEHICLES
DISPOSITIF SERVANT À TRANSMETTRE DES DONNÉES ENTRE DEUX VÉHICULES FERROVIAIRES

(30) Priorität: 20.07.2010 DE 102010036521
(43) Veröffentlichungstag der Anmeldung: 29.05.2013
(73) Patentinhaber: era-contact GmbH, 75015 Bretten (DE)
(72) Erfinder: PARAL, Thomas, 69214 Eppelheim (DE)
(74) Vertreter: Schaumburg und Partner Patentanwälte mbB
(86) Internationale Anmeldenummer: PCT/EP2011/061280
(87) Internationale Veröffentlichungsnummer: WO 2012/010409

(56) Entgegenhaltungen:
- DE-A1-102004 037 849
- US-A- 4 310 767
- US-A- 5 038 406
- Paral, Thomas: "IP network backbone with era_transceiver, 1 GBit/s communication over automatic couplers", , 21. November 2009 (2009-11-21), Seiten 1-31, XP002666073, Gefunden im Internet: URL:http://www.ukintpress-conferences.com/ conf/09rix_conf/pdfs/Day%202/12_Thomas_Par al.pdf

## Beschreibung

Die Erfindung betrifft eine Vorrichtung zur Übertragung von Daten zwischen zwei Schienenfahrzeugen, wobei an dem ersten Schienenfahrzeug eine erste Datenübertragungseinheit und an dem zweiten Schienenfahrzeug eine zweite Datenübertragungseinheit angeordnet ist. Zwischen den Datenübertragungseinheiten ist eine Datenübertragungsverbindung zur Datenübertragung zwischen den beiden Schienenfahrzeugen ausgebildet.

Eine Möglichkeit der Datenübertragung zwischen zwei Schienenfahrzeugen ist es, die Daten drahtgebunden zu übertragen. Hierzu ist eine mechanische Datenübertragungsverbindung über eine Kupplung zwischen den beiden Schienenfahrzeugen ausgebildet. Problematisch hieran ist, dass eine solche Datenübertragungsverbindung nur mit großem Aufwand bei Schienenfahrzeugen, die noch nicht über eine solche Vorrichtung verfügen, nachzurüsten ist.

Eine weitere Möglichkeit der Datenübertragung zwischen zwei Schienenfahrzeugen ist es, die Daten drahtlos über Wireless-LAN oder Bluetooth zu übertragen. Problematisch hierbei ist, dass nur eine begrenzte relativ geringe Übertragungsrate möglich ist und dass die über solche Datenübertragungsverbindungen übertragenen Daten auf einfache Weise von unautorisierten Personen abgefangen und manipuliert werden können, sodass sich diese Datenübertragungsmethoden nur für nicht sicherheitsrelevante Daten eignen.

Aus dem Dokument XP-00266073 und von DE102004037849 A1 her sind je eine Vorrichtung zum Übertragen von Daten zwischen Schienenfahrzeugen bekannt, bei der die Daten zwischen zwei Datenübertragungseinheiten mittels optischen Richtfunks übertragen werden. Die Datenübertragungseinheiten sind in dem Kupplungsgehäuse der Kupplungen der Schienenfahrzeuge angeordnet.

Es ist Aufgabe der Erfindung, eine Vorrichtung zur Übertragung von Daten zwischen mindestens zwei Schienenfahrzeugen anzugeben, bei der auf einfach Weise eine sichere Übertragung der zu übertragenen Daten erfolgt.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben.

Durch die Übertragung der Daten über die Datenübertragungsverbindung mittels optischen Richtfunks wird sichergestellt, dass diese Daten anders als bei anderen drahtlosen Lösungen nicht einfach abgefangen und manipuliert werden können. Somit können über den optischen Richtfunk auch sicherheitsrelevante Daten übertragen werden. Durch die Ausbildung der Datenübertragungsverbindung über einen solchen drahtlosen optischen Richtfunk können die Komponenten der Vorrichtung auch auf einfache Weise an vorhandenen Schienenfahrzeugen nachgerüstet werden, weil keine mechanische Verbindung notwendig ist. Somit ist auch eine potenzialfreie Signalübertragung sicher gestellt, was die Übertragung von großen Badbreiten ermöglicht.

Die erste Datenübertragungseinheit und die zweite Datenübertragungseinheit umfassen vorzugsweise jeweils einen Sender und mindestens zwei Empfänger. Durch das Vorsehen mehrere Empfänger pro Datenübertragungseinheit wird erreicht, dass bei während des reguläre Betriebs der beiden Schienenfahrzeugen auftretenden Positionsänderungen zwischen der beiden Schienenfahrzeugen, beispielsweise bei Kurvenfahrten (Gierwinkeländerungen) oder Steigungsänderungen (Nickwinkeländerungen), eine sichere Datenübertragung gewährleistet ist. Alternativ können die erste Datenübertragungseinheit und/oder die zweite Datenübertragungseinheit auf jeweils einen Empfänger und jeweils mindestens zwei Sender umfassen, wobei jeweils die mindestens zwei Sender die übertragenen Daten parallel übertragen.

Bei einer bevorzugten Ausführungsform der Erfindung umfassen die erste Datenübertragungseinheit und/oder die zweite Datenübertragungseinheit jeweils mindestens zwei Sender und mindestens zwei Empfänger. Hierdurch wird bei einer Änderung der relativen Position der Schienenfahrzeuge zueinander eine sichere Übertragung der zu übertragenen Daten gewährleistet.

Ferner ist es vorteilhaft, wenn die erste Datenübertragungseinheit und/oder die zweite Datenübertragungseinheit jeweils mindestens einen Transceiver umfassen. Durch den Transceiver werden ein Sender und ein Empfänger zusammengefasst, wodurch ein einfacher kostengünstiger Aufbau der Datenübertragungseinheit erreicht wird.

Bei einer bevorzugten Ausführungsform der Erfindung umfassen die erste Datenübertragungseinheit und/oder die zweite Datenübertragungseinheit jeweils vier, vorzugsweise acht, zu einem Rechteck angeordnete Sender und einen Empfänger, der im Mittelpunkt dieses Rechtecks angeordnet ist. Auf diese Weise ist es mit möglich mit wenigen Sendern und Empfängern eine zuverlässige Datenübertragung bei verschiedenen relativen Positionen der Schienenfahrzeuge zueinander zu erreichen.

Die erste Datenübertragungseinheit und/oder die zweite Datenübertragungseinheit umfassen insbesondere jeweils mindestens eine Diode, vorzugsweise eine Laserdiode. Die Laserdiode dient insbesondere als Sendelichtquelle des optischen Richtfunks zur Datenübertragung.

Hierbei werden insbesondere Laserdioden mit einer Wellenlänge im Bereich zwischen 800nm und 900 nm, vorzugsweise einer Wellenlänge von 850 nm, eingesetzt. Die Laserdioden haben insbesondere eine Leistung im Bereich zwischen 1 µW und 25 µW, so dass die Laserdioden die Kriterien der Schutzklasse 1M nach EN6025-1 erfüllen. Hierdurch wird erreicht, dass keine weiteren Sicherheitsmaßnahmen notwendig sind, da das ausgestrahlte Laserlicht für Personen ungefährlich ist. Ferner lassen sich solche Dioden einfach und kostengünstig beschaffen.

Die Datenübertragungseinheiten sind insbesondere an den einander zugewandten Enden der beiden Schienenfahrzeuge angeordnet. Der Abstand zwischen der ersten Datenübertragungseinheit und der zweiten Datenübertragungseinheit hat insbesondere einen Wert zwischen 1500 mm und 6000 mm. Bei einer bevorzugten Ausführungsform hat der Abstand einen Wert im Bereich zwischen 2000 mm und 4000 mm.

Ferner ist es vorteilhaft, wenn die erste Datenübertragungseinheit und/oder die zweite Datenübertragungseinheit in dem Abstand der beiden Datenübertragungseinheiten zueinander jeweils eine Fläche im Bereich zwischen 4500 mm x 1300 mm bis 5000 mm x 1700 mm ausleuchten. Es ist besonders vorteilhaft, wenn sie jeweils eine Fläche von 4700 mm x 1550 mm ausleuchten. Hierdurch wird erreicht, dass bei allen während des regulären Bahnbetriebs auftretenden Positionsänderungen der beiden Schienenfahrzeuge zueinander, also Gier-, Nick- und Rollwinkeländerungen während der Fahrt der Schienenfahrzeuge, trotzdem immer eine Datenübertragungsverbindung zwischen der ersten Datenübertragungseinheit und der zweiten Datenübertragungseinheit ausgebildet ist, sodass die zu übertragenen Daten mittels dem optischen Richtfunks zuverlässig übertragbar sind. Ferner wird durch die zuvor genannten Bereiche erreicht, dass trotz der gesicherten Datenübertragung die ausgeleuchtete Fläche derart begrenzt ist, dass keine auf einem Gleis, das neben dem Gleis, auf dem die beiden Schienenfahrzeuge fahren, angeordnet ist, fahrenden Schienenfahrzeuge in dem ausgeleuchteten Bereich sind, sodass es keine Fehlübertragungen zu eventuellen Datenübertragungseinheit dieser Schienenfahrzeuge kommt.

Die erste Datenübertragungseinheit und/oder die zweite Datenübertragungseinheit umfassen vorzugsweise jeweils mindestens eine Streuungslinse zur Streuung des ausgesandten Lichtes, mindestens einen Glasstab zur Streuung des ausgesandten Lichtes, mindestens eine Sammellinse zur Bündelung des einfallenden Lichtes und/oder mindestens einen Glasstab zur Bündelung des einfallenden Lichtes. Hierdurch wird erreicht, dass mit Hilfe der Sender der Datenübertragungseinheiten jeweils ein ausreichender Bereich ausgeleuchtet wird, aber durch die Bündelung des einfallenden Lichtes trotzdem eine notwendige Mindestlichtstärke für die Empfänger erreicht wird.

Bei einer alternativen Ausführungsform der Erfindung können die erste Datenübertragungseinheit und/oder die zweite Datenübertragungseinheit auch jeweils eine Sensoreinheit zur Ermittlung einer Relativbewegung zwischen der ersten Datenübertragungseinheit und der zweiten Datenübertragungseinheit umfassen. Eine Steuereinheit stellt die Richtung, in die die erste Datenübertragungseinheit und/oder die zweite Datenübertragungseinheit das Licht des optischen Richtfunks aussendet in Abhängigkeit dieser ermittelten Relativbewegung ein. Hierdurch wird ein automatisches Tracking zwischen den beiden Datenübertragungseinheiten erreicht, sodass es ausreicht, wenn beide Datenübertragungseinheiten jeweils einen Sender und einen Empfänger umfassen, sodass eine Datenübertragung von der ersten Datenübertragungseinheit zur zweiten Datenübertragungseinheit sowie von der zweiten Datenübertragungseinheit zur ersten Datenübertragungseinheit möglich ist.

Ferner ist es vorteilhaft, wenn die erste Datenübertragungseinheit Licht mit einer Lichtstärke im Bereich zwischen einem Empfangsempfindlichkeitswert und einem Übersteuerungswert der zweiten Datenübertragungseinheit aussendet. Der Empfangsempfindlichkeitswert ist die Lichtstärke, mit der Licht mindestens auf den Empfänger der zweiten Datenübertragungseinheit einfallen muss, damit dieser die über das Licht zu übertragenen Daten empfangen kann. Der Übersteuerungswert ist derjenige Wert, bei Überschreitung dessen eine Steuerung des Empfängers der zweiten Datenübertragungseinheit erfolgt, sodass keine sichere Datenübertragung mehr gewährleistet ist. Besonders vorteilhaft ist es, wenn die erste Datenübertragungseinheit Licht mit einer Lichtstärke zwischen 90 % des Übersteuerungswertes und dem

Übersteuerungswert aussendet. Durch das Aussenden von Licht nahe an der Grenze des Übersteuerungswertes wird erreicht, dass eine Übertragungsreserve gegeben ist, sodass auch bei widrigen Witterungsbedingungen, beispielsweise bei Nebel oder Regen, das von dem Empfänger der zweiten Datenübertragungseinheit empfangene Licht eine Lichtstärke hat, die größer ist als der Empfangsempfindlichkeitswert ist. So kann auch bei schlechten Witterungsbedingungen die Datenübertragung gewährleistet werden.

Das erste Schienenfahrzeug und das zweite Schienenfahrzeug sind insbesondere über eine mechanische Kupplung miteinander verbunden, wobei mindestens ein Sensor vorgesehen ist, mit Hilfe dessen ermittelbar ist, ob die Schienenfahrzeuge über die Kupplung miteinander verbunden sind oder nicht. Ferner ist eine Steuereinheit vorgesehen, die die Datenübertragungsverbindung über den optischen Richtfunk nur dann herstellt, wenn die beiden Schienenfahrzeuge über die mechanische Kupplung miteinander verbunden sind und dies durch den Sensor detektiert wurde.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
Figur 1 eine schematische Darstellung zweier Schienenfahrzeuge und einer Vorrichtung zur Übertragung von Daten zwischen den beiden Schienenfahrzeugen;
Figur 2 eine weitere schematische Ansicht eines der beiden Schienenfahrzeuge mit einer Datenübertragungseinheit;
Figur 3 eine schematische Darstellung der beiden Schienenfahrzeuge bei einem Höhenversatz zueinander;
Figur 4 eine schematische Darstellung der beiden Schienenfahrzeuge nach den Figuren 1 bis 3 bei einer Kurvenfahrt;
Figur 5 eine schematische Darstellung eines Schienenfahrzeuges und des durch eine Datenübertragungseinheit eines anderen Schienenfahrzeuges ausgeleuchteten Bereiches;
Figur 6 eine schematische Darstellung einer Datenübertragungseinheit gemäß einer ersten Ausführungsform der Erfindung;
Figur 7 eine schematische perspektivische Darstellung der Datenübertragungseinheit nach Figur 6 mit dem durch die Sender ausgeleuchteten Bereich;
Figur 8 eine schematische perspektivische Darstellung zweier Datenübertragungseinheiten gemäß einer zweiten Ausführungsform der Erfindung;
Figur 9 eine schematische Darstellung zweier Datenübertragungseinheiten und der ausgeleuchteten Fläche;
Figur 10 eine schematische Darstellung zweier Datenübertragungseinheiten gemäß einer dritten Ausführungsform der Erfindung; und
Figur 11 eine schematische Darstellung zweier Datenübertragungseinheiten gemäß einer vierten Ausführungsform der Erfindung.

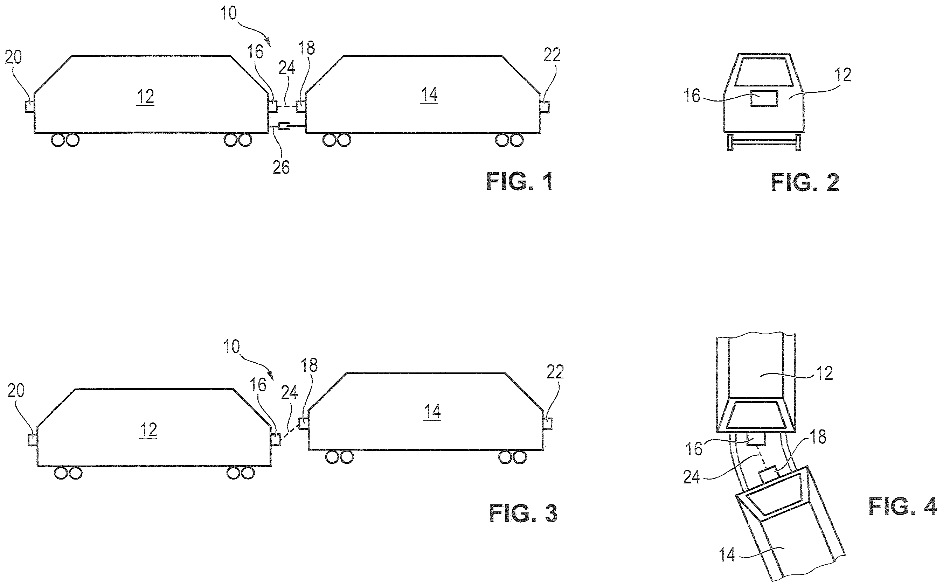

In Figur 1 ist eine schematische Darstellung zweier Schienenfahrzeuge 12, 14 und einer Vorrichtung 10 zur Übertragung von Daten zwischen den beiden Schienenfahrzeugen 12, 14 dargestellt. Die beiden Schienenfahrzeuge 12, 14 können beispielsweise Lokomotiven, Waggons oder auch andere schienengebundene Fahrzeuge sein.

Die Vorrichtung 10 umfasst eine erste Datenübertragungseinheit 16, die an einem Ende eines ersten Schienenfahrzeug 12 angeordnet ist, und eine zweite Datenübertragungseinheit 18, die an demjenigen Ende des zweiten Schienefahrzeugs 14 angeordnet ist, das dem Ende des ersten Schienfahrzeugs 12 zugewandt ist, an dem die erste Datenübertragungseinheit 16 angeordnet ist. Zwischen der ersten Datenübertragungseinheit 16 und der zweiten Datenübertragungseinheit 18 ist eine Datenübertragungsverbindung zur Übertragung von Daten mittels optischen Richtfunks ausgebildet. Die Datenübertragungsverbindung ist schematische durch die Strichlinie 24 angedeutet.

Ferner ist an dem ersten Schienenfahrzeug 12 eine dritte Datenübertragungseinheit 20 und an dem zweiten Schienenfahrzeug 14 eine vierte Datenübertragungseinheit 22 angeordnet, wobei die dritte Datenübertragungseinheit 20 an dem ersten Datenübertragungseinheit 16 entgegengesetzten Ende des ersten Schienenfahrzeugs 12 angeordnet ist und die zweite Datenübertragungseinheit 22 an dem der zweiten Datenübertragungseinheit 18 entgegengesetzten Ende des zweiten Schienenfahrzeugs 14 angeordnet ist. Mit Hilfe der dritten Datenübertragungseinheit 20 und mit Hilfe der vierten Datenübertragungseinheit 22 können Daten zu einem an dem entsprechenden Ende des Schienenfahrzeuges 12, 14 befindlichen weiteren Schienenfahrzeug übertragen werden. Auf diese Weise ist eine Datenübertragung über die mit Hilfe des optischen Richtfunks ausgebildete Datenübertragungsverbindung 24 zwischen den einzelnen Schienenfahrzeugen entlang aller zu einem Zug zusammengefasster Schienenfahrzeuge möglich.

Das erste Schienenfahrzeug 12 und das zweite Schienenfahrzeug 14 sind über eine Kupplung 26 mechanisch miteinander verbunden. Aufgrund der Kupplung 26 beträgt der Abstand zwischen dem ersten Schienenfahrzeug 12 und dem zweiten Schienenfahrzeug 14 zwischen 2000 mm und 6000 mm.

In Figur 2 ist eine schematische Darstellung des ersten Schienenfahrzeugs 12 dargestellt. Hierbei ist die dem zweiten Schienenfahrzeug 14 zugewandte Seite des ersten Schienenfahrzeugs 12 dargestellt, sodass die erste Datenübertragungseinheit 16 sichtbar ist.

Während der Fahrt der beiden Schienenfahrzeuge 12, 14 entlang einer Schienenstrecke kommt es zwischen den beiden Schienenfahrzeugen 12, 14 zu Änderung in der relativen Lage zueinander. Durch mechanische Puffer in der Kupplung 26, über die die beiden Schienenfahrzeuge 12, 14 miteinander verbunden, kann es beim Anfahren und Bremsen zu einer Änderung des Abstands von bis zu 120 mm kommen. Durch die unterschiedliche Abnutzung von Rädern der Schienenfahrzeuge 12, 14 können Höhenunterschied von bis zu 40 mm zwischen den beiden Schienenfahrzeugen 12, 14 auftreten. Ferner kann ein Höhenversatz durch das Befahren von unebenen Schiensträngen, insbesondere von Senken und Erhebungen, entstehen. Dieser Höhenversatz kann bei den zwei Schienenfahrzeugen 12, 14 bis zu 216 mm betragen.

In Figur 3 ist eine schematische Darstellung der beiden Schienenfahrzeuge 12, 14 gezeigt, bei denen ein solcher Höhenversatz zwischen den beiden Schienenfahrzeugen 12, 14 besteht.

Durch das Befahren von Weichen und/oder Kurven durch die beiden Schienenfahrzeuge 12, 14 kann es zu einem seitlichen Versatz der Schienenfahrzeuge 12, 14 relativ zueinander kommen. Der seitliche Versatz kann bis zu 500 mm betragen. In Figur 4 ist eine schematische Darstellung der beiden Schienenfahrzeuge 12, 14 während einer zuvor beschriebenen Kurvenfahrt gezeigt.

Des Weiteren kann es beim regulären Betrieb der Schienenfahrzeuge 12, 14 zu einer Torsion der beiden Schienenfahrzeuge 12, 14 relativ zueinander kommen. Gründe für die Torsion können beispielsweise Schwingungen, Befahren unebener Schieneverläufe und/oder Umwelteinflüsse, insbesondere Wind, sein. Hierdurch kann ein Höhenversatz von bis zu 210 mm zwischen den beiden Schienenfahrzeuge 12, 14 auftreten.

Die Datenübertragungseinheiten 16, 18 sind derart ausgebildet, dass bei allen zuvor beschrieben relativen Positionsänderungen der beiden Schienenfahrzeuge 12, 14 zueinander, insbesondere auch bei der Kombination dieser verschiedenen Positionsänderungen, die Datenübertragung mittels der Datenübertragungsverbindung 24. durch den optischen Richtfunk möglich ist. Hierzu sind die Datenübertragungseinheit 16, 18 derart ausgebildet, dass das von Ihnen jeweils abgestrahlte Licht eine Fläche von 4700 mm x 1500 mm im Abstand des jeweils anderen Schienenfahrzeugs 12, 14 aufleuchtet.

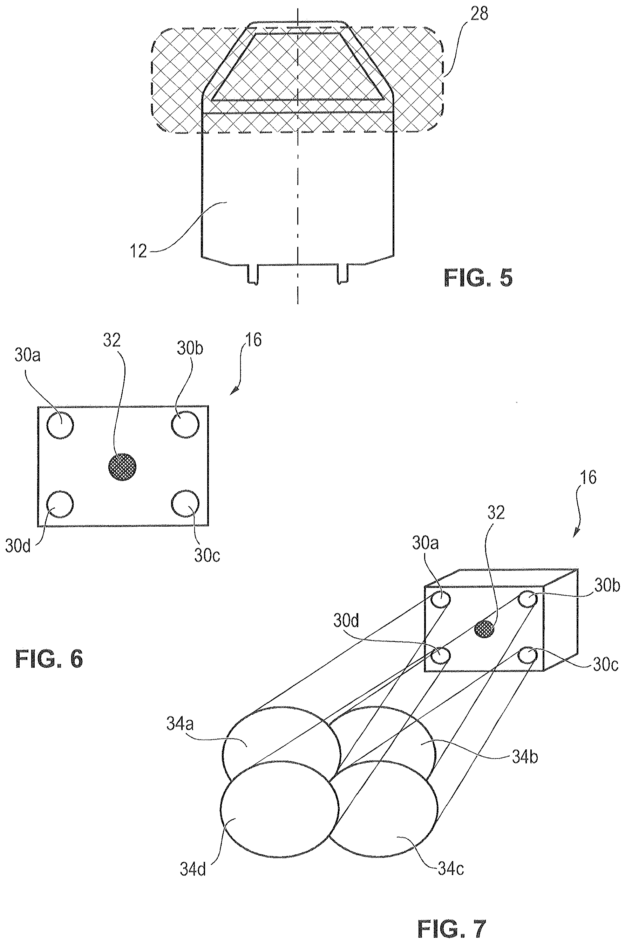

In Figur 5 ist eine schematische Darstellung des zweiten Schienenfahrzeugs 12 sowie des durch die erste Datenübertragungseinheit 16 des ersten Schienenfahrzeugs 12 ausgestrahlten Bereiches 28 dargestellt. Die beleuchtete Fläche 28 ist derart dimensioniert, dass zwar die Datenübertragungen zwischen dem ersten Schienenfahrzeug 12 und dem zweiten Schienenfahrzeug 14 gesichert ist, auf der anderen Seite aber auf neben denjenigen Schienen, auf denen das erste und das zweite Schienenfahrzeug 12, 14 fahren, verlaufenden Schienen fahrende andere Schienenfahrzeuge, die eventuell auch über entsprechende Datenübertragungseinheiten verfügen, hiervon nicht beeinflusst werden.

In Figur 6 ist eine schematische Darstellung der ersten Datenübertragungseinheit 16 dargestellt. Die anderen drei Datenübertragungseinheiten 18, 20, 22 sind vorzugsweise baugleich mit der ersten Datenübertragungseinheit 16 ausgebildet. Zur Vereinfachung der Beschreibung wird im Folgenden ausschließlich der Aufbau der ersten Datenübertragungseinheit 16 beschrieben. Die Ausführungen gelten entsprechend für die anderen drei Datenübertragungseinheiten 18, 20, 22. Bei einer alternativen Ausführungsform der Erfindung können die Datenübertragungseinheiten 16 bis 22 auch unterschiedlich ausgebildet sein.

Die erste Datenübertragungseinheit 16 umfasst vier Sender 30a bis 30d zum Aussenden des für den optischen Richtfunk benötigten Lichtes sowie einen Empfänger 32 zum Empfangen des einfallenden Lichtes von der zweiten Datenübertragungseinheit 18. Die vier Sender 30a bis 30d bilden die Eckpunkt eines Rechtecks. Der Empfänger ist derart angeordnet, dass sein Mittelpunkt mit dem Schnittpunkt der Diagonalen des durch die Sender 30a bis 30d aufgespannten Rechtecks zusammenfällt.

Die Sender 30a bis 30d umfassen jeweils insbesondere eine Laserdiode, mit deren Hilfe das für den optischen Richtfunk benötigte Licht und somit die Daten von der ersten Datenübertragungseinheit zur zweiten Datenübertragungseinheit 18 übertragen werden. Die Laserdioden haben insbesondere jeweils eine Wellenlänge von 850 nm und eine Leistung im Bereich zwischen 1 µW und 25 µW. Laserdioden mit den zuvor genannten Eigenschaften die Schutzklasse 1M nach EN6025-1, sodass die Datenübertragungseinheiten 16 bis 22 ohne weitere Sicherheitsvorkehrungen verwendet werden können, da das von ihnen ausgesandte Laserlicht nach derzeitigen Erkenntnissen keine Gefahr für das menschliche Auge darstellt.

Das von den Sendern 30a bis 30d jeweils ausgesandte Licht hat eine Lichtstärke im Bereich zwischen einer Empfangsempfindlichkeit des Empfängers 32 und eines Übersteuerungswertes des Empfängers 32. Die Empfangsempfindlichkeit ist diejenige Lichtstärke, mit der der Empfänger 32 mindestens bestrahlt werden muss, damit eine fehlerfreie Datenübertragung über die Datenübertragungsverbindung mittels optischen Richtfunks gewährleistet ist. Der Übersteuerungswert ist diejenige Lichtstärke, bei der so grade noch keine Übersteuerung des Empfängers 32 erfolgt, sodass eine fehlerfreie Datenübertragung bis zu dieser Lichtstärke möglich ist. Bei einer bevorzugten Ausführungsform der Erfindung sind die Sender 30a bis 30d derart gesteuert, dass sie jeweils eine Lichtstärke im Bereich zwischen 90 % des Übersteuerungswertes und dem Übersteuerungswert aussenden. Durch das Betreiben der Sender 30a bis 30d nahe des Übersteuerungswertes wird eine Schwundreserve erreicht, sodass auch bei schlechtem Umgebungsbedingungen das auf dem Empfänger der zweiten Datenübertragungseinheit 18 einfallende Licht eine ausreichende Lichtstärke, d. h. eine Lichtstärke größer der Empfangsempfindlichkeit, hat, sodass eine fehlerfreie Datenübertragung unabhängig von den Umgebungsbedingungen gewährleistet ist. Die schlechten Umgebungsbedingungen können beispielsweise Regen, Nebel, Tau und/oder Verschmutzungen der Datenübertragungseinheiten 16 bis 22 sein.

In Figur 7 ist eine schematische perspektivische Darstellung der ersten Datenübertragungseinheit 16 nach Figur 6 gezeigt. Durch die Kreise 34a bis 34d sind diejenigen Bereiche dargestellt, die von den einzelnen Sendern 30a bis 30d im Abstand der nicht dargestellten zweiten Datenübertragungseinheit 18 ausgeleuchtet werden. Hierbei senden alle Sender 30a bis 30d jeweils parallel dieselben Lichtimpulse aus, sodass unabhängig davon, in welchem Bereich 34a bis 34d der Empfänger der zweiten Datenübertragungseinheit 18 angeordnet ist, dieselben Lichtimpulse und somit auch die durch die Lichtimpulse codierten Daten fehlerfrei übertragen werden. Durch die vier Bereiche 34a bis 34d wird der gesamte auszustrahlende Bereich 28, wie in Figur 5 dargestellt, ausgeleuchtet, sodass bei allen während des regulären Betriebes der Schienenfahrzeuge 12, 14 auftretenden relativen Positionssendungen der Schienenfahrzeuge 12, 14 zueinander eine fehlerfreie zuverlässige Datenübertragung gewährleistet ist.

Wie in Figur 7 gut ersichtlich ist, ist die Datenübertragungseinheit 16 in Form einer kompakten Box ausgebildet, in der alle für die Datenübertragung notwendigen Bauteile enthalten sind. Durch die Ausgestaltung der Datenübertragungseinheit 16 in Form einer solchen kompakten Box wird erreicht, dass die Datenübertragungseinheiten 16 bis 22 auf einfache Weise an bestehenden Schienenfahrzeugen, die noch nicht über eine solche Datenübertragungseinheit 16 bis 22 zur Datenübertragung mittels optischen Richtfunks verfügen, nachgerüstet werden können, sodass auch ältere Schienenfahrzeuge auf einfache Weise zusammen mit neuen Schienenfahrzeugen, die werkseitig bereits über eine solche Datenübertragungseinheit zur Datenübertragung mittels optischen Richtfunks verfügen, eingesetzt werden können.

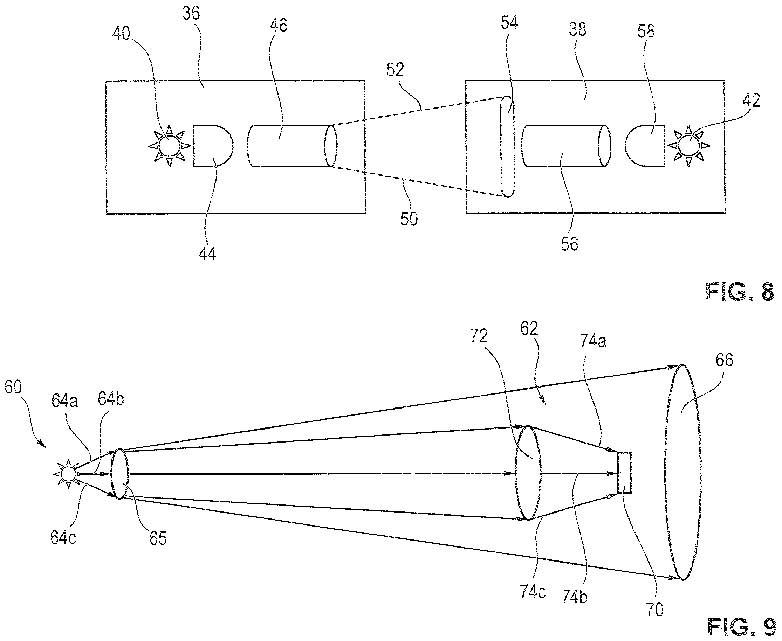

In Figur 8 ist eine schematische Darstellung eines Senders 36 der ersten Datenübertragungseinheit 16 und eines Empfängers 38 der zweiten Datenübertragungseinheit 18 gemäß einer zweiten Ausführungsform der Erfindung dargestellt. Der Sender 36 umfasst eine Diode 40, der Empfänger 38 ein Empfangselement 42 zum empfangen der ausgesandten Lichtimpulse. Das durch die Diode 40 des Sender 36 ausgesandte Licht wird über eine Streulinse 44 und einem Glasstab 46 gestreut, sodass über die entsprechende Auswahl der Streulinse 44 und des Glasstabes 46 ein gewünschter Strahlungswinkel des von dem Sender 36 abgestrahlten Lichtes eingestellt wird. Die Grenzen des von dem Sender 36 abgestrahlten Lichtes sind durch die Strichlinien 50, 52 schematisch dargestellt. Bei einer alternativen Ausführungsform der Erfindung kann der Sender 36 auch nur eine Linse 44 zur Streuung des ausgesandten Lichtes und keinen Glasstab 46 oder einen Stab aus einem anderen Lichtdurchlässigen Material umfassen.

Der Empfänger 38 umfasst eine Sammellinse 54, einen Glasstab 56 und eine weitere Linse 58 zur Bündelung des einfallenden Lichtes. Durch die Bündelung des Lichtes wird trotz einer verhältnismäßig kleinen Fläche des Empfangselementes 42 des Empfängers 38 eine ausreichende Lichtstärke des einfallenden Lichtes erreicht, sodass eine fehlerfreie Datenübertragung gewährleistet ist. Bei einer alternativen Ausführungsform des Empfängers 38 kann auch lediglich eine Sammellinse 54 zur Bündelung des einfallenden Lichtes verwendet werden. Das Empfangselement 42 ist insbesondere in Form eines Halbleiterelementes ausgebildet. Der Sender 36 und der Empfänger 38 haben vorzugsweise den gleichen Akzeptanzwinkel.

In Figur 9 ist eine schematische Darstellung eines Senders 60 der ersten Datenübertragungseinheit 16 und eines Empfängers 62 der zweiten Datenübertragungseinheit 18 gemäß einer dritten Ausführungsform der Erfindung dargestellt. Das von dem Sender 60 abgestrahlte Licht ist über die Pfeile 64a bis 64c angedeutet. Mit Hilfe einer Streulinse 65 wird das Licht 64a bis 64c gestreut, sodass im Abstand des zweiten Schienenfahrzeuges 14 von dem Sender 60 die mit den Bezugszeichen 66 bezeichnete Fläche ausgeleuchtet wird. Der Empfänger 62 umfasst ein Empfangselement 70 sowie eine Sammellinse 72. Mit Hilfe der Sammellinse 72 wird derjenige Teil des von dem Sender 60 ausgestrahlten Lichtes, der auf die Sammellinse 72 trifft, gebündelt und somit in gebündelter Form auf das Empfangselement 70 gelenkt. Das gebündelte Licht ist beispielhaft durch die Pfeile 74a bis 74c angedeutet.

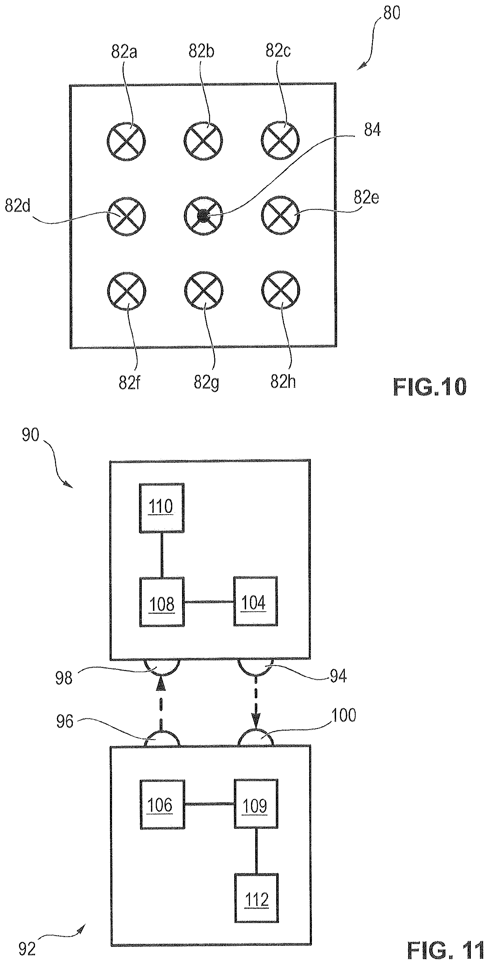

In Figur 10 ist eine schematische Darstellung einer Datenübertragungseinheit 80 gemäß einer vierten Ausführungsform der Erfindung gezeigt. Bei dieser vierten Ausführungsform umfasst die Datenübertragungseinheit 80 acht auf der Umfangslinie eines Quadrat angeordnete Sender 82a bis 82h sowie einen in der Mitte des Quadrates angeordneten Transceiver 84, mit dessen Hilfe sowohl Daten empfangen als auch ausgesandt werden können.

Alternativ sind auch andere Anordnungen der Sender, Empfänger und Transceiver möglich. Ferner können die Datenübertragungseinheiten 16 bis 22, 80 auch mehr oder weniger als die zuvor beschriebene Anzahl an Empfängern, Sendern und/oder Transceivern umfassen. Insbesondere können die Datenübertragungseinheiten 16 bis 22, 80 einen Sender und mehrere Empfänger, einen Empfänger und mehrere Sender oder mehrere Empfänger und mehrere Sender umfassen. Jeweils ein Empfänger und ein Sender können zu einem Transceiver zusammengefasst werden, sodass eine einfache kompakte Bauweise erreicht wird.

In Figur 11 ist eine schematische Darstellung einer fünften Datenübertragungseinheit 90 und einer sechsten Datenübertragungseinheit 92 gemäß einer weiteren Ausführungsform der Erfindung gezeigt. Die Datenübertragungseinheiten 90, 92 umfassen jeweils einen Sender 94, 96 und einen Empfänger 98, 100. Ferner umfassen die Datenübertragungseinheit 90, 92 jeweils einen Sensor 104, 106 zur Ermittlung einer relativen Positionsänderung der Schienenfahrzeuge 12, 14 zueinander. Ferner haben die Datenübertragungseinheiten 90, 92 jeweils eine Steuerungseinheit 108, 109, die in Abhängigkeit der mit Hilfe der Sensoren 104, 106 ermittelten relativen Positionsänderung zueinander die Sender 94, 96 derart ansteuern, dass unabhängig von der relativen Position der Schienenfahrzeuge 12, 14 zueinander das von den Sendern 94, 96 ausgesandte Licht und somit die durch das Licht codierten Daten auf die Empfänger 98,100 der jeweils anderen Datenübertragung 90, 92 treffen. Auf diese Weise wird ein Tracking erreicht, sodass jede Datenübertragungseinheit 90, 92 jeweils nur einen Sender 94, 96 und einen Empfänger 98, 100 haben muss.

Dieses Tracking erfolgt insbesondere in Form eines Regelkreises, wobei hierzu jede Datenübertragungseinheit 90, 92 einen weiteren Sensor 110, 112 zur Ermittlung der Lichtstärke des einfallenden Lichtes an der Position des Empfängers 98, 100 umfasst. Ermittelt der Sensor 110,112, dass die einfallenden Lichtstärke unter einem vorangestellten Grenzwert liegt, so wird mit Hilfe der Steuerungseinheit 108, 109 der anderen Datenübertragungseinheit 90, 92 der Sender 94, 96 dieser Datenübertragungseinheit 90, 92, insbesondere der Abstrahlungswinkel des Senders 94, 96, derart verstellt, dass die auf den Empfänger 98, 100 auftreffende Lichtstärke wieder den Grenzwert überschreitet und somit eine fehlerfreie Datenübertragung gewährleistet ist. Das Verstellen des Senders 94, 96 erfolgt insbesondere durch iteratives Verstellen des Abstrahlungswinkels des Senders 94, 96 in mindestens zwei Richtungen. Alternativ kann auch eine Nachregelung in Kombination mit der Winkeländerung zwischen dem Wagen und der mechanischen Kupplung realisiert werden.

Die Datenübertragungseinheiten 16, 18, 20, 22, 60, 90, 92 sind insbesondere derart ausgebildet, dass durch sie gleichzeitig Lichtimpulse ausgesandt und andere Lichtimpulse empfangen werden können. Auf diese Weise ist eine bidirektionale Datenübertragung, insbesondere eine vollduplex Datenübertragung möglich. Als Empfangselemente werden insbesondere opto-elektrische Wandler eingesetzt.

### Bezugszeichenliste

- 10: Vorrichtung
- 12, 14: Schienenfahrzeug
- 16 bis 22, 80, 90, 92: Datenübertragungseinheit
- 24: Datenübertragungsverbindung
- 26: Kupplung
- 28, 34a bis 34d, 66: Bereich
- 30a bis 30d, 36, 60, 82a bis 82h, 94, 96: Sender
- 32, 38, 62, 98, 100: Empfänger
- 40: Diode
- 42,70: Empfangselement
- 44, 54, 58, 65, 72: Linse
- 45, 56: Glasstab
- 50,52: Grenzlinie
- 64a bis 64c, 74a bis 74c: Licht
- 84: Transceiver
- 104, 10F, 110, 112: Sensor
- 108, 109: Steuereinheit

## Patentansprüche

1. Vorrichtung zur Übertragung von Daten zwischen zwei Schienenfahrzeugen,
mit einer an dem ersten Schienenfahrzeug (12) angeordneten ersten Datenübertragungseinheit (16 bis 22, 80,90, 92), und
mit einer an dem zweiten Schienenfahrzeug (14) angeordneten zweiten Datenübertragungseinheit (16 bis 22, 80, 90, 92),
wobei zwischen der ersten Datenübertragungseinheit (16 bis 22, 80, 90, 92) und der zweiten Datenübertragungseinheit (16 bis 22, 80, 90, 92) eine Datenübertragungsverbindung zur Datenübertragungen zwischen dem ersten Schienenfahrzeug (12) und dem zweiten Schienenfahrzeug (14) ausgebildet ist,
wobei die Datenübertragung über die Datenübertragungsverbindung mittels optischen Richtfunks erfolgt,
**dadurch gekennzeichnet, dass** der Abstand zwischen der erste Datenübertragungseinheit (16 bis 22, 80, 90, 92) und der zweite Datenübertragungseinheit (16 bis 22, 80, 90, 92) einen Wert im Bereich zwischen 1500 mm und 6000 mm, hat, und
dass die erste Datenübertragungseinheit (16 bis 22, 80, 90, 92) und/oder die zweite Datenübertragungseinheit (16 bis 22, 80, 90, 92) in dem Abstand der ersten Datenübertragungseinheit (16 bis 22, 80, 90, 92) und der zweiten Datenübertragungseinheit (16 bis 22, 80, 90, 92) zueinander eine Fläche (28) im Bereich zwischen 4500 mm x 1300 mm bis 5000 mm x 1700 mm ausleuchten.

2. Vorrichtung nach Anspruch 1, **dadurch gekennzeichnet, dass** die erste Datenübertragungseinheit (16 bis 22, 80, 90, 92) und/oder die zweite Datenübertragungseinheit (16 bis 22, 80, 90, 92) jeweils einen Sender (30a bis 30d, 36, 60, 82a bis 82h, 94, 96) und mindestens zwei Empfänger (32, 38, 62, 98, 100) umfassen.

3. Vorrichtung nach Anspruch 1, **dadurch gekennzeichnet, dass** die erste Datenübertragungseinheit (16 bis 22, 80, 90, 92) und/oder die zweite Datenübertragungseinheit (16 bis 22, 80, 90, 92) jeweils einen Empfänger (32, 38, 62, 98, 100) und mindestens zwei Sender (30a bis 30d, 36, 60, 82a bis 82h, 94, 96) umfassen.

4. Vorrichtung nach einem der vorhergehenden Ansprüche, **dadurch gekennzeichnet, dass** die erste Datenübertragungseinheit (16 bis 22, 80, 90, 92) und/oder die zweite Datenübertragungseinheit (16 bis 22, 80, 90, 92) jeweils mindestens zwei Sender (30a bis 30d, 36, 60, 82a bis 82h, 94, 96) und mindestens zwei Empfänger (32, 38, 62, 98, 100) umfassen.

5. Vorrichtung nach einem der vorhergehenden Ansprüche, **dadurch gekennzeichnet**, die erste Datenübertragungseinheit (16 bis 22, 80, 90, 92) und/oder die zweite Datenübertragungseinheit (16 bis 22, 80, 90, 92) jeweils mindestens einen Transceiver (84) umfassen.

6. Vorrichtung nach einem der vorhergehenden Ansprüche, **dadurch gekennzeichnet, dass** die die erste Datenübertragungseinheit (16 bis 22, 80, 90, 92) und/oder die zweite Datenübertragungseinheit (16 bis 22, 80, 90, 92) jeweils vier, vorzugsweise acht, zu einem Rechteck angeordnete Sender (30a bis 30d, 36, 60, 82a bis 82h, 94, 96) umfasst, und dass ein Empfänger (32, 38, 62, 98, 100) im Mittelpunkt des Rechtecks angeordnet ist.

7. Vorrichtung nach einem der vorhergehenden Ansprüche, **dadurch gekennzeichnet, dass** die erste Datenübertragungseinheit (16 bis 22, 80, 90, 92) und/oder die zweite Datenübertragungseinheit (16 bis 22, 80, 90, 92) jeweils mindestens eine Diode (40), insbesondere eine Laserdiode, umfasst.

8. Vorrichtung nach Anspruch 7, **dadurch gekennzeichnet, dass** die Diode (40) Licht mit einer Wellenlänge im Bereich zwischen 800nm und 900nm, insbesondere mit einer Wellenlänge von 850nm, ausstrahlt.

9. Vorrichtung nach einem der Ansprüche 7 oder 8, **dadurch gekennzeichnet, dass** die Diode (40) eine Leistung im Bereich zwischen 1 µW und 25 µW hat.

10. Vorrichtung nach einem der vorhergehenden Ansprüche, **dadurch gekennzeichnet, dass** der Abstand zwischen der erste Datenübertragungseinheit (16 bis 22, 80, 90, 92) und der zweite Datenübertragungseinheit (16 bis 22, 80, 90, 92) einen Wert im Bereich zwischen 2000 mm und 4000 mm hat.

11. Vorrichtung nach einem der vorhergehenden Ansprüche, **dadurch gekennzeichnet, dass** die erste Datenübertragungseinheit (16 bis 22, 80, 90, 92) und/oder die zweite Datenübertragungseinheit (16 bis 22, 80, 90, 92) in dem Abstand der ersten Datenübertragungseinheit (16 bis 22, 80, 90, 92) und der zweiten Datenübertragungseinheit (16 bis 22, 80, 90, 92) zueinander eine Fläche (28) von 4700 mm x1550 mm ausleuchten.

12. Vorrichtung nach einem der vorhergehenden Ansprüche, **dadurch gekennzeichnet, dass** die erste Datenübertragungseinheit (16 bis 22, 80, 90, 92) und/oder die zweite Datenübertragungseinheit (16 bis 22, 80, 90, 92) jeweils mindestens eine Streuungslinse (44) zur Streuung des ausgesandten Lichts, mindestens einen Glasstab (46) zur Streuung des ausgesandten Lichts, mindestens eine Sammellinse (54) zur Bündelung des einfallenden Lichtes und/oder mindestens einen Glasstab (56) zur Bündelung des einfallenden Lichts umfasst.

13. Vorrichtung nach einem der vorhergehenden Ansprüche, **dadurch gekennzeichnet, dass** die erste Datenübertragungseinheit (16 bis 22, 80, 90, 92) und/oder die zweite Datenübertragungseinheit (16 bis 22, 80, 90, 92) eine Sensoreinheit (104, 106) zur Ermittlung einer Relativbewegung zwischen der ersten Datenübertragungseinheit (16 bis 22, 80, 90, 92) und der zweite Datenübertragungseinheit (16 bis 22, 80, 90, 92) und eine Steuereinheit (108, 109), die die Richtung, in die die erste Datenübertragungseinheit (16 bis 22, 80, 90, 92) bzw. die zweite Datenübertragungseinheit (16 bis 22, 80, 90, 92) das Licht des optischen Richtfunks aussendet, in Abhängigkeit der ermittelten Relativbewegung einstellt, umfasst.

14. Vorrichtung nach einem der vorhergehenden Ansprüche, **dadurch gekennzeichnet, dass** die erste Datenübertragungseinheit (16 bis 22, 80, 90, 92) Licht mit einer Lichtstärke im Bereich zwischen einem Empfangsempfindlichkeitswert und einem Übersteuerungswert der zweite Datenübertragungseinheit (16 bis 22, 80, 90, 92), insbesondere im Bereich zwischen 90% des Übersteuerungswertes und dem Übersteuerungswert, aussendet.

15. Vorrichtung nach einem der vorhergehenden Ansprüche, **dadurch gekennzeichnet, dass** das erste Schienenfahrzeug (12) und das zweite Schienenfahrzeug (14) über eine mechanische Kupplung (26) miteinander verbindbar sind, dass ein Sensor zur Detektion eines verbundenen Zustand vorgesehen ist, und dass eine Steuereinheit nur dann die Datenübertragungsverbindung herstellt, wenn der Sensor den verbundenen Zustand detektiert hat.

## Claims

1. A device for transmitting data between two rail vehicles,
comprising a first data transmission unit (16 to 22, 80, 90, 92) arranged on the first rail vehicle (12), and
a second data transmission unit (16 to 22, 80, 90, 92) arranged on the second rail vehicle (14),
wherein between the first data transmission unit (16 to 22, 80, 90, 92) and the second data transmission unit (16 to 22, 80, 90, 92) a data transmission link for transmitting data between the first rail vehicle (12) and the second rail vehicle (14) is formed,
wherein the data transmission via the data transmission link is carried out by means of free-space optical communication,
**characterized in that** the distance between the first data transmission unit (16 to 22, 80, 90, 92) and the second data transmission unit (16 to 22, 80, 90, 92) has a value in the range between 1500 mm and 6000 mm, and
that the first data transmission unit (16 to 22, 80, 90, 92) and/or the second data transmission unit (16 to 22, 80, 90, 92), in the distance between the first data transmission unit (16 to 22, 80, 90, 92) and the second data transmission unit (16 to 22, 80, 90, 92) to each other, illuminate an area (28) in the range between 4500 mm x 1300 mm to 5000 x 1700 mm.

2. The device according to claim 1, **characterized in that** the first data transmission unit (16 to 22, 80, 90, 92) and/or the second data transmission unit (16 to 22, 80, 90, 92) each comprise a transmitter (30a to 30d, 36, 60, 82a to 82h, 94, 96) and at least two receivers (32, 38, 62, 98, 100).

3. The device according to claim 1, **characterized in that** the first data transmission unit (16 to 22, 80, 90, 92) and/or the second data transmission unit (16 to 22, 80, 90, 92) each comprise a receiver (32, 38, 62, 98, 100) and at least two transmitters (30a to 30d, 36, 60, 82a to 82h, 94, 96).

4. The device according to one of the preceding claims, **characterized in that** the first data transmission unit (16 to 22, 80, 90, 92) and/or the second data transmission unit (16 to 22, 80, 90, 92) each comprise at least two transmitters (30a to 30d, 36, 60, 82a to 82h, 94, 96) and at least two receivers (32, 38, 62, 98, 100).

5. The device according to one of the preceding claims, **characterized in that** the first data transmission unit (16 to 22, 80, 90, 92) and/or the second data transmission unit (16 to 22, 80, 90, 92) each comprise at least one transceiver (84).

6. The device according to one of the preceding claims, **characterized in that** the first data transmission unit (16 to 22, 80, 90, 92) and/or the second data transmission unit (16 to 22, 80, 90, 92) each comprise four, preferably eight, transmitters (30a to 30d, 36, 60, 82a to 82h, 94, 96) that are arranged in the form of a rectangle, and **in that** one receiver (32, 38, 62, 98, 100) is arranged in the center of the rectangle.

7. The device according to one of the preceding claims, **characterized in that** the first data transmission unit (16 to 22, 80, 90, 92) and/or the second data transmission unit (16 to 22, 80, 90, 92) each comprise at least one diode (40), in particular a laser diode.

8. The device according to claim 7, **characterized in that** the diode (40) emits light with a wavelength in a range between 800 nm and 900 nm, in particular with a wavelength of 850 nm.

9. The device according to one of claims 7 or 8, **characterized in that** the diode (40) has a power in the range between 1 µW and 25 µW.

10. The device according to one of the preceding claims, **characterized in that** the distance between the first data transmission unit (16 to 22, 80, 90, 92) and the second data transmission unit (16 to 22, 80, 90, 92) has a value in the range between 2000 and 4000 mm.

11. The device according to one of the preceding claims, **characterized in that** the first data transmission unit (16 to 22, 80, 90, 92) and/or the second data transmission unit (16 to 22, 80, 90, 92), in the distance between the first data transmission unit (16 to 22, 80, 90, 92) and the second data transmission unit (16 to 22, 80, 90, 92) to each other, illuminate an area (28) of 4700 mm x 1550 mm.

12. The device according to one of the preceding claims, **characterized in that** the first data transmission unit (16 to 22, 80, 90, 92) and/or the second data transmission unit (16 to 22, 80, 90, 92) each comprise at least one diverging lens (44) for scattering the emitted light, at least one glass bar (46) for scattering the emitted light, at least one collecting lens (54) for collecting the incident light and/or at least one glass bar (56) for collecting the incident light.

13. The device according to one of the preceding claims, **characterized in that** the first data transmission unit (16 to 22, 80, 90, 92) and/or the second data transmission unit (16 to 22, 80, 90, 92) comprises a sensor unit (104, 106) for determining a relative movement between the first data transmission unit (16 to 22, 80, 90, 92) and the second data transmission unit (16 to 22, 80, 90, 92) and a control unit (108, 109) that determines the direction in which the first data transmission unit (16 to 22, 80, 90, 92) or the second data transmission unit (16 to 22, 80, 90, 92) emits the light of the free-space optical communication in dependence of the determined relative movement.

14. The device according to one of the preceding claims, **characterized in that** the first data transmission unit (16 to 22, 80, 90, 92) emits light with a light intensity in the range between a receiving sensitivity value and an override value of the second data transmission unit (16 to 22, 80, 90, 92), in particular in the range between 90 % of the override value and the override value.

15. The device according to one of the preceding claims, **characterized in that** the first rail vehicle (12) and the second rail vehicle (14) are connectable to each other via a mechanical coupling (26), **in that** a sensor for detecting a connected condition is provided, and **in that** a control unit only generates the data transmission link if the sensor has detected the connected condition.

## Revendications

1. Dispositif de transmission de données entre deux véhicules ferroviaires,
comprenant une première unité de transmission de données (16 à 22, 80, 90, 92) agencée sur le premier véhicule ferroviaire (12), et
comprenant une deuxième unité de transmission de données (16 à 22, 80, 90, 92) agencée sur le deuxième véhicule ferroviaire (14),
une liaison de transmission de données permettant des transmissions de données entre le premier véhicule ferroviaire (12) et le deuxième véhicule ferroviaire (14) étant établie entre la première unité de transmission de données (16 à 22, 80, 90, 92) et la deuxième unité de transmission de données (16 à 22, 80, 90, 92),
la transmission de données étant réalisée par l'intermédiaire de la liaison de transmission de données au moyen d'un faisceau hertzien optique,
**caractérisé en ce que** l'écart entre la première unité de transmission de données (16 à 22, 80, 90, 92) et la deuxième unité de transmission de données (16 à 22, 80, 90, 92) présente une valeur dans la plage comprise entre 1500 mm et 6000 mm, et
**en ce que** la première unité de transmission de données (16 à 22, 80, 90, 92) et/ou la deuxième unité de transmission de données (16 à 22, 80, 90, 92) dans l'écart entre la première unité de transmission de données (16 à 22, 80, 90, 92) et la deuxième unité de transmission de données (16 à 22, 80, 90, 92) l'une par rapport à l'autre éclairent une surface (28) dans à plage comprise entre 4500 mm x 1300 mm et 5000 mm x 1700 mm.

2. Dispositif selon la revendication 1, **caractérisé en ce que** la première unité de transmission de données (16 à 22, 80, 90, 92) et/ou la deuxième unité de transmission de données (16 à 22, 80, 90, 92) comportent chacune un émetteur (30a à 30d, 36, 60, 82a à 82h, 94, 96) et au moins deux récepteurs (32, 38, 62, 98, 100).

3. Dispositif selon la revendication 1, **caractérisé en ce que** la première unité de transmission de données (16 à 22, 80, 90, 92) et/ou la deuxième unité de transmission de données (16 à 22, 80, 90, 92) comportent chacune un récepteur (32, 38, 62, 98, 100) et au moins deux émetteurs (30a à 30d, 36, 60, 82a à 82h, 94, 96).

4. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent chacune au moins deux émetteurs (30a à 30d, 36, 60, 82a à 82h, 94, 96) et au moins deux récepteurs (32, 38, 62, 98, 100).

5. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent chacune au moins un émetteur-récepteur (84).

6. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent chacune quatre, de préférence huit émetteurs (30a à 30d, 36, 60, 82a à 82h, 94, 96) agencés de manière à former un rectangle, et **en ce qu'**un récepteur (32, 38, 62, 98, 100) est agencé au centre du rectangle.

7. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent chacune au moins une diode (40), en particulier une diode laser.

8. Dispositif selon la revendication 7, **caractérisé en ce que** la diode (40) émet une lumière d'une longueur d'onde dans la plage comprise entre 800 nm et 900 nm, en particulier d'une longueur d'onde de 850 nm.

9. Dispositif selon l'une quelconque des revendications 7 ou 8, **caractérisé en ce que** la diode (40) présente une puissance dans la plage comprise entre 1 *µ*W et 25 *µ*W.

10. Dispositif selon l'une quelconque des revendications précédentes, **caractérisé en ce que** l'écart entre la première unité de transmission de données (16 à 22, 80, 90, 92) et la deuxième unité de transmission de données (16 à 22, 80, 90, 92) présente une valeur dans la plage comprise entre 2000 mm et 4000 mm.

11. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) éclairent dans l'écart entre la première unité de transmission de données (16 à 22, 80, 90, 92) et la deuxième unité de transmission de données (16 à 22, 80, 90, 92) l'une par rapport à l'autre une surface (28) de 4700 mm x 1550 mm.

12. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent chacune au moins une lentille de diffusion (44) pour la diffusion de la lumière émise, au moins une tige de verre (46) pour la diffusion de la lumière émise, au moins une lentille convergente (54) pour la focalisation de la lumière incidente et/ou au moins une tige de verre (56) pour la focalisation de la lumière incidente.

13. Dispositif selon l'une quelconque des revendications précédentes, **caractérisé en ce que** la première unité de transmission de données (16 à 22, 80, 90, 92) et/ou la deuxième unité de transmission de données (16 à 22, 80, 90, 92) comportent une unité de détection (104, 106) pour la détermination d'un mouvement relatif entre la première unité de transmission de données (16 à 22, 80, 90, 92) et la deuxième unité de transmission de données (16 à 22, 80, 90, 92) et une unité de commande (108, 109), qui règle la direction dans laquelle la première unité de transmission de données (16 à 22, 80, 90, 92) ou la deuxième unité de transmission de données (16 à 22, 80, 90, 92) émet la lumière du faisceau hertzien optique en fonction du mouvement relatif déterminé.

14. Dispositif selon l'une quelconque des revendications précédentes, **caractérisé en ce que** la première unité de transmission de données (16 à 22, 80, 90, 92) émet une lumière d'une intensité dans la plage comprise entre une valeur de sensibilité de réception et une valeur de saturation de la deuxième unité de transmission de données (16 à 22, 80, 90, 92), en particulier dans la plage comprise entre 90 % de la valeur de saturation et la valeur de saturation.

15. Dispositif selon l'une quelconque des revendications précédentes, **caractérisé en ce que** le premier véhicule ferroviaire (12) et le deuxième véhicule ferroviaire (14) peuvent être reliés l'un à l'autre par un dispositif d'accouplement mécanique (26), **en ce qu'**un capteur est destiné à détecter un état relié, et **en ce qu'**une unité de commande n'établit la liaison de transmission de données que lorsque le capteur a détecté l'état relié.
